# EUROPEAN PATENT APPLICATION

(11) **EP 4 848 859 A1**
(43) Date of publication of application: **02.12.2026**
(21) Application number: 25751118.8
(22) Date of filing: 16.01.2025
(51) Int. Cl.: H04W 72/0453

(54) **COMMUNICATION METHOD AND APPARATUS**

(30) Priority: 07.02.2024 CN 202410176431
(71) Applicant: Huawei Technologies Co., Ltd., Shenzhen, Guangdong 518129 (CN)
(72) Inventor: XIE, Xinqian, Shenzhen, Guangdong 518129 (CN)
(74) Representative: Huawei European IPR
(86) International application number: PCT/CN2025/072785
(87) International publication number: WO 2025/167516

(57) **Abstract**

A communication method and apparatus are provided, and are applied to the field of communication technologies. The method includes: A first communication apparatus sends a first signal, where a frequency range occupied in a time unit by N first resource elements occupied by the first signal is equal to a first bandwidth, any one of the N first resource elements includes Q second resource elements, and a frequency range occupied in the time unit by any one of the Q second resource elements is equal to the first bandwidth. According to embodiments of this application, resource configuration in an integrated sensing and communication scenario can be adapted.

## Description

### CROSS-REFERENCE TO RELATED APPLICATIONS

This application claims priority to Chinese Patent Application No. 202410176431.7, filed with the China National Intellectual Property Administration on February 7, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

During the evolution from a 5th generation (5th generation, 5G) mobile communication system to a 5G-advanced (5G-advanced, 5G-A) technology, integrated sensing and communication is considered as one of key technologies capable of extending service capabilities of mobile communication networks. The core concept of the integrated sensing and communication technology is to introduce sensing capabilities to a mobile communication network, and construct capabilities such as detection, tracking, and imaging of a sensing target, thereby integrating communication and sensing capabilities into one network, to achieve harmonious coexistence and mutual benefit. A principle of the sensing technology is that a transmitting device sends radio waves (namely, sensing signals) to a specific direction; after the radio wave illuminates a surface of the sensing target, reflected waves (namely, echo signals of the sensing signals) is formed, so that a receiving device receives and processes the reflected waves, to obtain sensing data, for example, information such as a location, a velocity, or a type of the sensing target.

An orthogonal frequency division multiplexing (orthogonal frequency division multiplexing, OFDM) waveform technology is typically used for a communication signal. In the OFDM waveform technology, orthogonal subcarriers can be constructed in frequency domain. In this way, different modulation symbols are mapped to the orthogonal subcarriers, so that simultaneous transmission of the different modulation symbols can be achieved. Current resource allocation schemes are tailored for the OFDM waveform, that is, resource configuration is performed at a granularity of a subcarrier or a resource block (resource block, RB) including at least one subcarrier. However, in an integrated sensing and communication scenario, there are other waveforms in addition to the OFDM waveform, for example, a chirp multiplexing waveform. It can be learned that the current resource configuration schemes cannot adapt to the integrated sensing and communication scenario.

### SUMMARY

Embodiments of this application provide a communication method and apparatus, to adapt to resource configuration in an integrated sensing and communication scenario.

According to a first aspect, this application provides a communication method. The method may be performed by a first communication apparatus, may be performed by another device including a function of the first communication apparatus, or may be performed by a chip system (or a chip) or another functional module, where the chip system or the functional module can implement the function of the first communication apparatus, and the chip system or the functional module is, for example, disposed in the first communication apparatus.

For example, the method is performed by the first communication apparatus. The method may include: The first communication apparatus determines N first resource elements, and sends a first signal based on the N first resource elements. Alternatively, the first communication apparatus sends a first signal, where the first signal occupies N first resource elements. A frequency range occupied in a time unit by the N first resource elements is equal to a first bandwidth, any one of the N first resource elements includes Q second resource elements, a frequency range occupied in the time unit by any one of the Q second resource elements is equal to the first bandwidth, and N and Q are positive integers.

Optionally, the first signal may be used for sensing.

Optionally, the first bandwidth may be in a second bandwidth, and the second bandwidth may be a carrier bandwidth or a bandwidth part.

In the foregoing embodiment, resource configuration is performed by using the first resource element as a granularity, the frequency range occupied in the time unit by the N first resource elements is equal to the first bandwidth, and the frequency range occupied in the time unit by any one of the Q second resource elements included in the first resource element is also equal to the first bandwidth. This means that a frequency of the second resource element may vary with time, to be applicable to a chirp multiplexing waveform in which a frequency varies with time. Therefore, resource configuration in an integrated sensing and communication scenario can be adapted.

In a possible implementation, the time unit may be a symbol, the first resource element occupies the symbol in time domain, a frequency range of the first resource element at any moment in the symbol may be less than the first bandwidth, and a frequency of the second resource element varies at different moments in the symbol. Alternatively, the time unit may be a symbol, the first resource element occupies the symbol in time domain, and a frequency range of the first resource element at any moment in the symbol may alternatively be equal to the first bandwidth.

In a possible implementation, the frequency of the second resource element increases over time within the time unit from a first frequency to a second frequency; or the frequency of the second resource element increases over time within the time unit from a third frequency to a second frequency and then from a first frequency to the third frequency, where the first frequency is a lower boundary of the first bandwidth, and the second frequency is an upper boundary of the first bandwidth.

In a possible implementation, the N first resource elements may belong to M first resource elements, a frequency range occupied in the time unit by the M first resource elements is equal to the first bandwidth, and M is an integer greater than or equal to N.

In the foregoing implementation, the first bandwidth may be divided into the M first resource elements in the time unit, and the N first resource elements in the M first resource elements are used to carry the first signal.

In a possible implementation, Q may be greater than 1, the M first resource elements may include P second resource elements, and P is an integer greater than or equal to Q. At a first moment in the time unit, a frequency spacing between two second resource elements having a minimum frequency spacing among the Q second resource elements is equal to a frequency spacing between two second resource elements having a minimum frequency spacing among the P second resource elements. Alternatively, at a first moment in the time unit, a frequency spacing between two second resource elements having a minimum frequency spacing among the Q second resource elements is greater than a frequency spacing between two second resource elements having a minimum frequency spacing among the P second resource elements. Alternatively, at a first moment in the time unit, a frequency spacing between two second resource elements having a minimum frequency spacing among the Q second resource elements is equal to K times a frequency spacing between two second resource elements having a minimum frequency spacing among the P second resource elements, where K is an integer greater than 1.

In the foregoing implementation, the N first resource elements occupied by the first signal may be centralized or may be distributed in frequency. The implementation is flexible.

In a possible implementation, the first communication apparatus may further send first information; or the first communication apparatus may further receive first information. The first information may indicate the first bandwidth.

In the foregoing implementation, the first bandwidth may be configured by the first communication apparatus, or the first bandwidth may be configured by another communication apparatus. The implementation is flexible.

In a possible implementation, the first communication apparatus may further send second information; or the first communication apparatus may further receive second information. The second information may indicate the N first resource elements.

In the foregoing implementation, the resources occupied by the first signal may be configured by the first communication apparatus, or the resources occupied by the first signal may be configured by another communication apparatus. The implementation is flexible.

According to a second aspect, this application provides a communication method. The method may be performed by a first communication apparatus, may be performed by another device including a function of the first communication apparatus, or may be performed by a chip system (or a chip) or another functional module, where the chip system or the functional module can implement the function of the first communication apparatus, and the chip system or the functional module is, for example, disposed in the first communication apparatus.

For example, the method is performed by the first communication apparatus. The method may include: The first communication apparatus determines H second resource elements, and sends a first signal based on the N second resource elements. Alternatively, the first communication apparatus sends a first signal, where the first signal occupies H second resource elements. A frequency range occupied in a time unit by the H second resource elements is equal to a first bandwidth, a frequency range occupied in the time unit by any one of the H second resource elements is equal to the first bandwidth, and H is a positive integer.

Optionally, the first signal may be used for sensing.

Optionally, the first bandwidth may be in a second bandwidth, and the second bandwidth may be a carrier bandwidth or a bandwidth part.

In the foregoing embodiment, resource configuration is performed by using the second resource element as a granularity, and the frequency range occupied in the time unit by the second resource element is also equal to the first bandwidth. This means that a frequency of the second resource element may vary with time, to be applicable to a chirp multiplexing waveform in which a frequency varies with time. Therefore, resource configuration in an integrated sensing and communication scenario can be adapted.

In a possible implementation, the time unit is a symbol, the first signal occupies the symbol in time domain, a frequency range of the H second resource elements at any moment in the symbol is less than the first bandwidth, and a frequency of the second resource element varies at different moments in the symbol. Alternatively, a frequency range of the H second resource elements at any moment in the symbol may be equal to the first bandwidth.

In a possible implementation, the frequency of the second resource element increases over time within the time unit from a first frequency to a second frequency; or the frequency of the second resource element increases over time within the time unit from a third frequency to a second frequency and then from a first frequency to the third frequency. The first frequency is a lower boundary of the first bandwidth, and the second frequency is an upper boundary of the first bandwidth.

In a possible implementation, the H second resource elements belong to P second resource elements, a frequency range occupied in the time unit by the P second resource elements is equal to the first bandwidth, and P is an integer greater than or equal to H.

In the foregoing implementation, the first bandwidth may be divided into the P second resource elements in the time unit, and the H second resource elements in the P second resource elements are used to carry the first signal.

In a possible implementation, at a second moment in the time unit, a frequency spacing between two second resource elements having a minimum frequency spacing among the H second resource elements is equal to a frequency spacing between two second resource elements having a minimum frequency spacing among the P second resource elements; at a second moment in the time unit, a frequency spacing between two second resource elements having a minimum frequency spacing among the H second resource elements is greater than a frequency spacing between two second resource elements having a minimum frequency spacing among the P second resource elements; or at a second moment in the time unit, a frequency spacing between two second resource elements having a minimum frequency spacing among the H second resource elements is equal to J times a frequency spacing between two second resource elements having a minimum frequency spacing among the P second resource elements, where J is an integer greater than 1.

In the foregoing implementation, the H second resource elements occupied by the first signal may be distributed in a centralized manner or a distributed manner in frequency. The implementation is flexible.

In a possible implementation, the first communication apparatus may further send first information; or the first communication apparatus may further receive first information. The first information may indicate the first bandwidth.

In a possible implementation, the first communication apparatus may further send third information; or the first communication apparatus may further receive third information. The third information may indicate the H second resource elements.

According to a third aspect, this application provides a communication method. The method may be performed by a second communication apparatus, may be performed by another device including a function of the second communication apparatus, or may be performed by a chip system (or a chip) or another functional module, where the chip system or the functional module can implement the function of the second communication apparatus, and the chip system or the functional module is, for example, disposed in the second communication apparatus.

For example, the method is performed by the second communication apparatus. The method may include: The second communication apparatus determines N first resource elements, and receives a first signal based on the N first resource elements. Alternatively, the second communication apparatus receives a first signal, where the first signal occupies N first resource elements. A frequency range occupied in a time unit by the N first resource elements is equal to a first bandwidth, any one of the N first resource elements includes Q second resource elements, a frequency range occupied in the time unit by any one of the Q second resource elements is equal to the first bandwidth, and N and Q are positive integers.

Optionally, the first signal may be used for sensing.

Optionally, the first bandwidth may be in a second bandwidth, and the second bandwidth may be a carrier bandwidth or a bandwidth part.

In a possible implementation, the time unit may be a symbol, the first resource element occupies the symbol in time domain, a frequency range of the first resource element at any moment in the symbol may be less than the first bandwidth, and a frequency of the second resource element varies at different moments in the symbol. Alternatively, the time unit may be a symbol, the first resource element occupies the symbol in time domain, and a frequency range of the first resource element at any moment in the symbol may alternatively be equal to the first bandwidth.

In a possible implementation, the frequency of the second resource element increases over time within the time unit from a first frequency to a second frequency; or the frequency of the second resource element increases over time within the time unit from a third frequency to a second frequency and then from a first frequency to the third frequency, where the first frequency is a lower boundary of the first bandwidth, and the second frequency is an upper boundary of the first bandwidth.

In a possible implementation, the N first resource elements may belong to M first resource elements, a frequency range occupied in the time unit by the M first resource elements is equal to the first bandwidth, and M is an integer greater than or equal to N.

In a possible implementation, Q may be greater than 1, the M first resource elements may include P second resource elements, and P is an integer greater than or equal to Q. At a first moment in the time unit, a frequency spacing between two second resource elements having a minimum frequency spacing among the Q second resource elements is equal to a frequency spacing between two second resource elements having a minimum frequency spacing among the P second resource elements. Alternatively, at a first moment in the time unit, a frequency spacing between two second resource elements having a minimum frequency spacing among the Q second resource elements is greater than a frequency spacing between two second resource elements having a minimum frequency spacing among the P second resource elements. Alternatively, at a first moment in the time unit, a frequency spacing between two second resource elements having a minimum frequency spacing among the Q second resource elements is equal to K times a frequency spacing between two second resource elements having a minimum frequency spacing among the P second resource elements, where K is an integer greater than 1.

In a possible implementation, the second communication apparatus may further send first information; or the second communication apparatus may further receive first information. The first information may indicate the first bandwidth.

In a possible implementation, the second communication apparatus may further send second information; or the second communication apparatus may further receive second information. The second information may indicate the N first resource elements.

According to a fourth aspect, this application provides a communication method. The method may be performed by a second communication apparatus, may be performed by another device including a function of the second communication apparatus, or may be performed by a chip system (or a chip) or another functional module, where the chip system or the functional module can implement the function of the second communication apparatus, and the chip system or the functional module is, for example, disposed in the second communication apparatus.

For example, the method is performed by the second communication apparatus. The method may include: The second communication apparatus determines H second resource elements, and receives a first signal based on the H second resource elements. The second communication apparatus receives the first signal, where the first signal occupies the H second resource elements. A frequency range occupied in a time unit by the H second resource elements is equal to a first bandwidth, a frequency range occupied in the time unit by any one of the H second resource elements is equal to the first bandwidth, and H is a positive integer.

Optionally, the first signal may be used for sensing.

Optionally, the first bandwidth may be in a second bandwidth, and the second bandwidth may be a carrier bandwidth or a bandwidth part.

In a possible implementation, the time unit is a symbol, the first signal occupies the symbol in time domain, a frequency range of the H second resource elements at any moment in the symbol is less than the first bandwidth, and a frequency of the second resource element varies at different moments in the symbol. Alternatively, a frequency range of the H second resource elements at any moment in the symbol may be equal to the first bandwidth.

In a possible implementation, the frequency of the second resource element increases over time within the time unit from a first frequency to a second frequency; or the frequency of the second resource element increases over time within the time unit from a third frequency to a second frequency and then from a first frequency to the third frequency. The first frequency is a lower boundary of the first bandwidth, and the second frequency is an upper boundary of the first bandwidth.

In a possible implementation, the H second resource elements belong to P second resource elements, a frequency range occupied in the time unit by the P second resource elements is equal to the first bandwidth, and P is an integer greater than or equal to H.

In a possible implementation, at a second moment in the time unit, a frequency spacing between two second resource elements having a minimum frequency spacing among the H second resource elements is equal to a frequency spacing between two second resource elements having a minimum frequency spacing among the P second resource elements; at a second moment in the time unit, a frequency spacing between two second resource elements having a minimum frequency spacing among the H second resource elements is greater than a frequency spacing between two second resource elements having a minimum frequency spacing among the P second resource elements; or at a second moment in the time unit, a frequency spacing between two second resource elements having a minimum frequency spacing among the H second resource elements is equal to J times a frequency spacing between two second resource elements having a minimum frequency spacing among the P second resource elements, where J is an integer greater than 1.

In a possible implementation, the second communication apparatus may further send first information; or the second communication apparatus may further receive first information. The first information may indicate the first bandwidth.

In a possible implementation, the second communication apparatus may further send third information; or the second communication apparatus may further receive third information. The third information may indicate the H second resource elements.

According to a fifth aspect, this application further provides a communication apparatus. The communication apparatus is configured to perform the method according to any one of the first aspect or the second aspect and the possible implementations of the first aspect or the second aspect. The communication apparatus is, for example, a first communication apparatus, or a functional module in the first communication apparatus, for example, a baseband apparatus or a chip system.

In a possible implementation, the communication apparatus includes the baseband apparatus and a radio frequency apparatus.

In another possible implementation, the communication apparatus includes a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a sixth aspect, this application further provides a communication apparatus. The communication apparatus is configured to perform the method according to any one of the third aspect or the fourth aspect and the possible implementations of the third aspect or the fourth aspect. The communication apparatus is, for example, a second communication apparatus, or a functional module in the second communication apparatus, for example, a baseband apparatus or a chip system.

In a possible implementation, the communication apparatus includes the baseband apparatus and a radio frequency apparatus.

In another possible implementation, the communication apparatus includes a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a seventh aspect, this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the first aspect or the second aspect and the possible implementations of the first aspect or the second aspect.

According to an eighth aspect, this application further provides a communication apparatus. The communication apparatus may include one or more processors. Optionally, the communication apparatus may further include a memory. The memory is configured to store one or more computer programs or instructions. The one or more processors are configured to execute the one or more computer programs or instructions stored in the memory, so that the communication apparatus performs the method according to any one of the third aspect or the fourth aspect and the possible implementations of the third aspect or the fourth aspect.

According to a ninth aspect, this application further provides a communication system, where the communication system includes the communication apparatus according to the fifth aspect, the communication apparatus according to the sixth aspect, or the communication apparatus according to the fifth aspect and the communication apparatus according to the sixth aspect.

According to a tenth aspect, this application further provides a computer-readable storage medium. The computer-readable storage medium is configured to store a computer program or instructions. When the computer program or the instructions are run, the method according to any one of the first aspect to the fourth aspect and the possible implementations of the first aspect to the fourth aspect is implemented.

According to an eleventh aspect, this application further provides a computer program product including instructions. When the computer program product runs on a computer, the method according to any one of the first aspect to the fourth aspect and the possible implementations of the first aspect to the fourth aspect is implemented.

According to a twelfth aspect, this application further provides a chip system, including at least one processor configured to read and execute program instructions in a memory, so that the chip system implements the method according to any one of the first aspect to the fourth aspect and the possible implementations of the first aspect to the fourth aspect. Optionally, the chip system may include a chip, or may include the chip and another discrete device. This is not limited.

For technical effects that can be achieved in any one of the third aspect to the twelfth aspect and the possible implementations of the third aspect to the twelfth aspect, correspondingly refer to the technical effects that can be achieved in any one of the first aspect or the second aspect and the possible implementations of the first aspect or the second aspect. Details are not described again.

### BRIEF DESCRIPTION OF DRAWINGS

FIG. 1 is a diagram of a network architecture of a communication system;
FIG. 2 is a diagram of an integrated sensing and communication scenario;
FIG. 3a to FIG. 3f are diagrams of a plurality of sensing scenarios;
FIG. 4a and FIG. 4b are diagrams of an OFDM waveform and a chirp multiplexing waveform;
FIG. 5 is a schematic flowchart of a communication method according to an embodiment of this application;
FIG. 6 is a diagram of a second resource element according to an embodiment of this application;
FIG. 7 is a diagram of a second bandwidth according to an embodiment of this application;
FIG. 8a to FIG. 8c are diagrams of first resource elements according to an embodiment of this application;
FIG. 9a to FIG. 9c are diagrams of H second resource elements according to an embodiment of this application;
FIG. 10 is a schematic flowchart of a communication method according to an embodiment of this application;
FIG. 11 is a schematic flowchart of a communication method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of still another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings. A network architecture and a service scenario described in this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

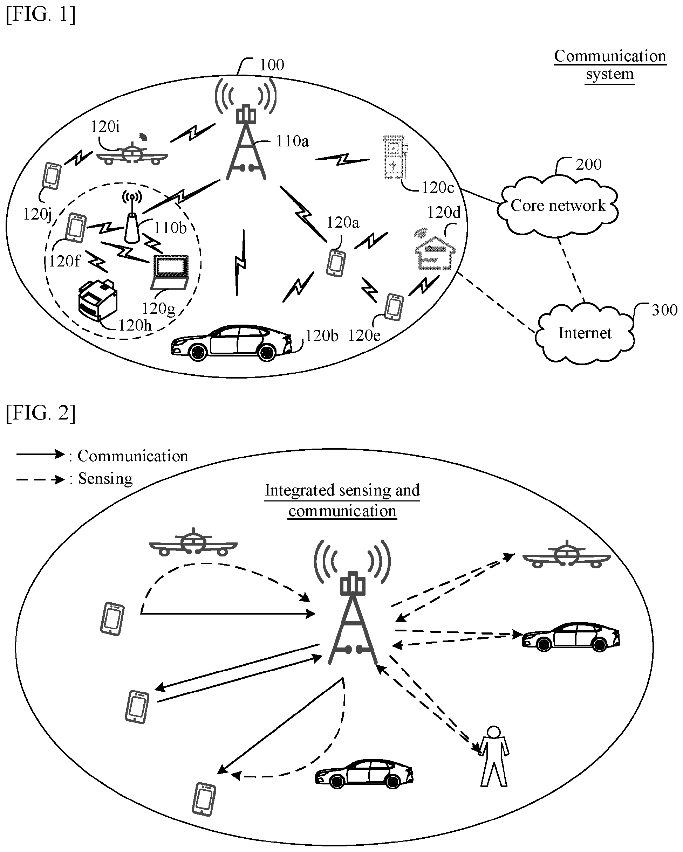

The technical solutions in embodiments of this application may be applied to various communication systems, for example, a universal mobile telecommunications system (universal mobile telecommunications system, UMTS), a wireless local area network (wireless local area network, WLAN), a short-range wireless communication system (for example, a sidelink (sidelink) system, a wireless fidelity (wireless fidelity, Wi-Fi) system, or a Bluetooth system), a wired network, a vehicle to everything (vehicle to everything, V2X) communication system, a device-to-device (device-to-device, D2D) communication system, and an internet of vehicles communication system, a 4th generation (4th generation, 4G) mobile communication system (for example, a long term evolution (long term evolution, LTE) system), an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system (for example, a new radio (NR) system), a future communication system (for example, a 6th generation (6th generation, 6G) mobile communication system), or another similar communication system. This is not limited. In embodiments of this application, a communication system shown in FIG. 1 is used as an example for description. When the technical solutions in embodiments of this application are applied to another communication system, a device, a component, a module, and the like in embodiments may be replaced with a corresponding device, component, and module in the another communication system. This is not limited.

FIG. 1 is a diagram of an architecture of a communication system to which an embodiment of this application is applied. As shown in FIG. 1, the communication system includes an access network 100 and a core network 200. Optionally, the communication system may further include an internet 300. The access network 100 may include at least one radio access network (radio access network, RAN) node, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, mobile phones in FIG. 1 include 120a, 120e, 120f, and 120j. The mobile phone 120a may access the base station 110a, be connected to the vehicle 120b, directly communicate with the mobile phone 120e, and access the HAP. The mobile phone 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The network device is a network side device having a wireless transceiver function. The network device may be an apparatus, in a radio access network (radio access network, RAN), that provides a wireless communication function for a terminal device, and is referred to as a RAN device. Alternatively, the network device may be a core network device. For ease of understanding, the following uses an example in which the network device is a RAN device for description. The RAN may be an access network in the 3rd generation partnership project (3rd generation partnership project, 3GPP), for example, a 4G network, a 5G network, or a future-oriented 6G network. Alternatively, the RAN may be an open access network (open RAN, O-RAN or ORAN), a cloud radio access network (cloud radio access network, CRAN), or a communication network of the foregoing two or more networks. The RAN device may be a base station (base station), an evolved NodeB (evolved NodeB, eNodeB), a transmission reception point (transmission reception point, TRP), a next generation NodeB (next generation NodeB, gNB) in the 5G mobile communication system, a base station in the 6G mobile communication system, a base station in the future mobile communication system, an access node in a Wi-Fi system, a wireless relay node, a wireless backhaul node, or the like.

The RAN device may alternatively be a module or unit that implements some functions of the base station, for example, a central unit (central unit, CU), a distributed unit (distributed unit, DU), or a radio unit (radio unit, RU). For example, the CU can implement functions of a radio resource control protocol and a packet data convergence protocol (packet data convergence protocol, PDCP) of the base station, and can further implement functions of a service data adaptation protocol (service data adaptation protocol, SDAP). The DU implements functions of a radio link control layer and a medium access control (media access control, MAC) layer of the base station, and may further implement functions of some or all physical layers. For detailed descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio unit, for example, included in a remote radio unit (remote radio unit, RRU), an active antenna unit (active antenna unit, AAU), or a remote radio head (remote radio head, RRH). In different systems, the CU, the DU, or the RU may have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The network device may be a macro base station (like 110a in FIG. 1), or may be a micro base station or an indoor base station (like 110b in FIG. 1), or may be a relay node or a donor node. A specific technology and a specific device form that are used for the network device are not limited in embodiments of this application.

In embodiments of this application, a function of the network device may alternatively be performed by a module (for example, a chip) in the network device, or may be performed by a control subsystem including the function of the network device. The control subsystem including the function of the network device herein may be a control center in the foregoing application scenarios, such as the smart grid, the industrial control, the smart transportation, and the smart city.

The terminal device is a user-side device having a wireless transceiver function. The terminal device may also be referred to as a terminal, user equipment (user equipment, UE), a user terminal, a user apparatus, a subscriber unit, a subscriber station, an access terminal, an access station, a UE station, a remote station, a wireless communication device, a mobile console, a mobile terminal, or the like. The terminal device may be widely used in various scenarios, for example, D2D communication, V2X communication, machine to machine (machine to machine, M2M) communication or machine type communication (machine type communication, MTC), internet of things (internet of things, IOT), virtual reality (virtual reality, VR), augmented reality (augmented reality, AR), industrial control (industrial control), autonomous driving (self driving), telemedicine (remote medical), a smart grid (smart grid), smart furniture, smart office, smart wearables, smart transportation, and a smart city (smart city). The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like.

In embodiments of this application, the apparatus configured to implement a function of the terminal device may be the terminal device, or may be an apparatus that can support the terminal device in implementing the function, for example, a chip system or a combined component or component that can implement a function of the terminal device. The apparatus may be installed in the terminal device. A specific technology and a specific device form used by the terminal device are not limited in embodiments of this application.

The network device and the terminal device may be at fixed locations, or may be movable. The network device and the terminal device may be deployed on land, including indoor devices, outdoor devices, handheld devices, or vehicle-mounted devices; may be deployed on water; or may be deployed on an airplane, a balloon, or an artificial satellite in the air. Application scenarios of the network device and the terminal device are not limited in embodiments of this application.

The network device and the terminal device may communicate with each other by using an air interface (air interface) protocol. The air interface may be referred to as an air interface for short. The network devices may communicate with each other by using an interface protocol between the network devices. The terminal devices may communicate with each other by using an interface protocol between the terminal devices. Communication between the network device and the terminal device, between network devices, and between terminal devices may be performed by using a licensed spectrum, may be performed by using an unlicensed spectrum, or may be performed by using both the licensed spectrum and the unlicensed spectrum. This is not limited.

Roles of the network device and the terminal device may be relative. For example, a helicopter or an uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device. In other words, 110a and 120i communicate with each other by using a wireless air interface protocol. Certainly, 110a and 120i may alternatively communicate with each other based on an interface protocol between network devices. In this case, for 110a, 120i is also a network device. Therefore, both the network device and the terminal device may be collectively referred to as communication apparatuses. 110a and 110b in FIG. 1 may be referred to as communication apparatuses having a function of the network device, and 120a to 120j in FIG. 1 may be referred to as communication apparatuses having a function of the terminal device.

The following describes technical features in embodiments of this application.

### 1. Integrated sensing and communication

During the evolution from a 5G mobile communication system to a 5G-A technology, integrated sensing and communication is considered as one of key technologies capable of extending service capabilities of mobile communication networks. The core concept of the integrated sensing and communication technology is to introduce sensing capabilities to a mobile communication network, and construct capabilities such as detection, tracking, and imaging of a target, thereby integrating communication and sensing capabilities into one network, to achieve harmonious coexistence and mutual benefit. FIG. 2 is a diagram of an integrated sensing and communication scenario. FIG. 2 is shown by using an example in which a solid line represents communication and a dashed line represents sensing. As shown in FIG. 2, a network device may sense another object through self-sending and self-receiving, or may sense another object while communicating with a terminal device. FIG. 2 is shown by using an example in which the terminal device is a smartphone and sensing targets are an uncrewed aerial vehicle, a pedestrian, and a vehicle.

### 2. Monostatic sensing and bi-static sensing

Sensing technologies may be typically classified into two modes: monostatic sensing and bi-static sensing. The monostatic sensing mode means that a transmitting device of a sensing signal and a receiving device of an echo signal of the sensing signal are a same device. In other words, in the monostatic sensing mode, the transmitting device needs to send the sensing signal, and further needs to receive the echo signal that is of the sensing signal and that is reflected by a surface of a sensing target. Therefore, the monostatic sensing mode may also be referred to as a self-sending and self-receiving mode. This is not limited. The bi-static sensing mode means that a transmitting device of a sensing signal and a receiving device of an echo signal of the sensing signal are two different devices. In other words, a sensing station A sends a sensing signal, and an echo signal that is of the sensing signal and that is reflected by a surface of a sensing target is received by a sensing station B. Therefore, the bi-static sensing mode may also be referred to as an A-sending and B-receiving mode. It should be noted that the echo signal of the sensing signal is a signal obtained through reflection of the sensing signal on the surface of the sensing target. Therefore, the echo signal may still be referred to as a sensing signal.

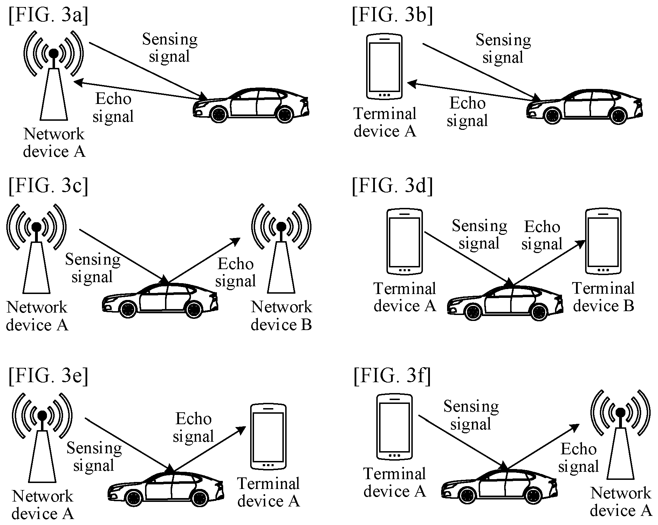

FIG. 3a to FIG. 3f show examples of diagrams of sensing scenarios to which an embodiment of this application is applicable. FIG. 3a to FIG. 3f provide six sensing scenarios to which an embodiment of this application is applicable, which are respectively: a scenario in which a network device A performs self-sending and self-receiving, that is, a scenario in which the network device A sends a sensing signal and receives an echo signal, as shown in FIG. 3a; a scenario in which a terminal device A performs self-sending and self-receiving, that is, a scenario in which the terminal device A sends a sensing signal and receives an echo signal, as shown in FIG. 3b; a scenario in which a network device A sends a sensing signal and a network device B receives an echo signal, as shown in FIG. 3c; a scenario in which a terminal device A sends a sensing signal and a terminal device B receives an echo signal, as shown in FIG. 3d; a scenario in which a network device A sends a sensing signal and a terminal device A receives an echo signal, as shown in FIG. 3e; and a scenario in which a terminal device A sends a sensing signal and a network device A receives an echo signal, as shown in FIG. 3f. FIG. 3a to FIG. 3f are shown by using an example in which a sensing target is a vehicle and the terminal device is a smartphone.

The sensing target may also be referred to as a target, a detected target, a sensed object, a detected object, a sensed device, or the like. This is not limited. The sensing target may be various tangible objects, in an environment, that can reflect an electromagnetic wave. For example, the sensing target may be a static object like a mountain, a forest, or a building. For another example, the sensing target may alternatively be a movable object like a vehicle, an uncrewed aerial vehicle, a pedestrian, or a terminal device. A specific implementation form of the sensing target is not limited in embodiments of this application.

### 3. Orthogonal frequency division multiplexing (orthogonal frequency division multiplexing, OFDM) waveform subcarrier

An OFDM waveform technology is typically used for a communication signal. In the OFDM waveform technology, orthogonal subcarriers (which may also be referred to as subcarriers in an OFDM waveform, OFDM waveform subcarriers, or the like) can be constructed in frequency domain. In this way, different modulation symbols are mapped to the orthogonal subcarriers, so that simultaneous transmission of the different modulation symbols can be achieved. For example, a relationship between a to-be-sent modulation symbol (*k*) and a signal *s*(*t*) using an OFDM waveform may be shown in Formula (1). $s \left(t\right) = {\sum }_{k = 0}^{M} a \left(k\right) {e}^{j 2 π \left(k-Δk\right) Δ f \left(t-Δt\right)}$ Formula (1)

∑·is a summation operation, *k* is an index of a subcarrier, *M* is a quantity of subcarriers, Δ*f* is a subcarrier spacing, *t* is time, and Δ*k* and Δ*t* are predetermined parameters.

When a transmitting device sends a communication signal to a receiving device by using an OFDM waveform, the transmitting device may generate an OFDM signal based on a to-be-sent modulation symbol and Formula (1) above, to map the to-be-sent modulation symbol to orthogonal subcarriers, so that different modulation symbols are simultaneously sent.

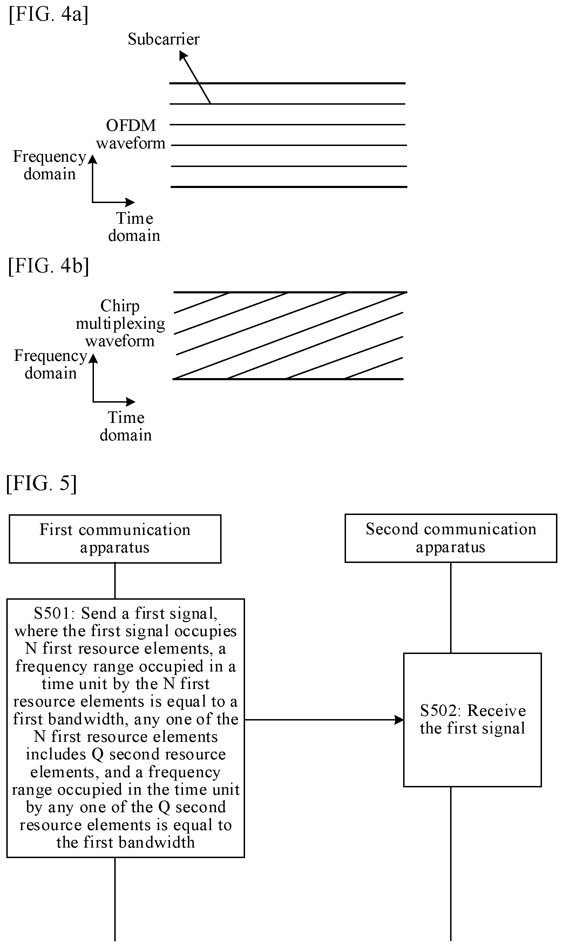

Currently, a resource occupied by a communication signal is mainly configured at a granularity of a subcarrier or a resource block including at least one subcarrier, and is applicable only to an OFDM waveform. In other words, the communication signal is carried in at least one subcarrier, or the communication signal is carried in at least one resource block. A frequency of the subcarrier in a symbol remains constant. In other words, the frequency of the subcarrier remains unchanged with time, as shown in FIG. 4a.

In an integrated sensing and communication scenario, there may be other waveforms in addition to the OFDM waveform, for example, a chirp multiplexing waveform. In a chirp multiplexing waveform technology, a chirp multiplexing manner is used in time domain and frequency domain, so that a sensing signal can occupy a large bandwidth in a symbol, thereby improving sensing performance. In other words, in the chirp multiplexing waveform technology, a frequency domain resource to which a modulation symbol is mapped varies with time, and can occupy more bandwidth, as shown in FIG. 4b. It can be learned that the current resource configuration schemes cannot adapt to resource configuration in a scenario in which a plurality of waveforms coexist, for example, resource configuration in the integrated sensing and communication scenario.

In view of this, embodiments of this application provide a communication method and apparatus, to adapt to resource configuration in the integrated sensing and communication scenario. The method and the apparatus in this application are based on a same technical concept. Because problem-resolving principles of the method and the apparatus are similar, mutual reference may be made to implementation of the apparatus and the method, and repeated parts are not described.

The following first describes some technical terms in embodiments of this application.

A first signal may be used for sensing. For example, the first signal may be referred to as a sensing signal. This is not limited. For example, the first signal may be a physical broadcast channel (physical broadcast channel, PBCH), may be a reference signal (for example, a demodulation reference signal (demodulation reference signal, DMRS), a channel state information reference signal (channel state information reference signal, CSI RS), a sounding reference signal (sounding reference signal, SRS), or another reference signal), may be a downlink channel (for example, a physical downlink control channel (physical downlink control channel, PDCCH) or a physical downlink shared channel (physical downlink shared channel, PDSCH)), or may be an uplink channel (for example, a physical uplink control channel (physical uplink control channel, PUCCH) or a physical uplink shared channel (physical uplink shared channel, PUSCH)). A specific implementation form of the first signal is not limited in embodiments of this application. In embodiments of this application, an example in which the first signal is applied to an integrated sensing and communication scenario is used for description. It should be understood that the first signal may be further applied to another scenario in which a plurality of waveforms coexist than the integrated sensing and communication scenario. This is not limited.

A first communication apparatus may be configured to send a first signal. The first communication apparatus may be a network device or a component (for example, a DU and/or an RU) in the network device, or may be a terminal device or a component in the terminal device. This is not limited. For example, the first communication apparatus may be the network device A in FIG. 3a, FIG. 3c, or FIG. 3e, or may be the terminal device A in FIG. 3b, FIG. 3d, or FIG. 3f.

A second communication apparatus may be configured to receive a first signal. The second communication apparatus may be a network device or a component (for example, a DU and/or an RU) in the network device, or may be a terminal device or a component in the terminal device. This is not limited. For example, the first communication apparatus is configured to send a first signal, and the second communication apparatus may be configured to receive the first signal. For example, the second communication apparatus may be the network device A in FIG. 3a or FIG. 3f, may be the terminal device A in FIG. 3b or FIG. 3e, may be the network device B in FIG. 3c, or may be the terminal device B in FIG. 3d.

For descriptions of the network device and the terminal device, refer to related content shown in FIG. 1. Details are not described herein again.

A resource may include a time domain resource, include a frequency domain resource, or include a time domain resource and a frequency domain resource. In embodiments of this application, an example in which the resource includes a frequency domain resource or includes a time domain resource and a frequency domain resource is used for description. The time domain resource may include a symbol (symbol), a slot (slot), a mini-slot (mini-slot), a partial slot (partial slot), a subframe (subframe), a radio frame (frame), a sensing slot (sensing slot), or the like. This is not limited. The frequency domain resource may include a resource element (resource element, RE), a resource block (resource block, RB), an RB set (RB set), a subchannel (subchannel), a resource pool (resource pool), a bandwidth part (bandwidth part, BWP), a carrier (carrier), a subcarrier, a channel (channel), an interlace (interlace), or the like. This is not limited.

A time unit may be one or more symbols, may be one or more slots, may be one or more mini-slots, may be one or more subframes, or may be one or more radio frames. A time domain granularity is not limited in embodiments of this application. A plurality of time units may be consecutive in time or may be discrete. This is not limited. The symbol may be an OFDM symbol, or the symbol may be an OFDM (discrete fourier transform-spread-OFDM, DFT-S-OFDM) symbol based on discrete Fourier transform. A specific implementation form of the symbol is not limited in embodiments of this application.

FIG. 5 shows an example of a schematic flowchart of a communication method according to an embodiment of this application. As shown in FIG. 5, the method may include the following content.

S501: A first communication apparatus sends a first signal.

For example, the first communication apparatus may determine a resource used to transmit (or carry) the first signal, and send the first signal by using the resource. The first signal may be used for sensing. For details, refer to content of the descriptions of the terms. Details are not described again.

Embodiments of this application provide two resource configuration schemes: performing resource configuration at a granularity of a first resource element and performing resource configuration at a granularity of a second resource element. The following describes the first resource element and the second resource element.

1. The first resource element may also be referred to as a chirp resource block, a resource block, or the like. A specific name of the first resource element is not limited in embodiments of this application. In time domain, the first resource element may occupy a time unit. For example, the time unit may be a symbol (for example, an OFDM symbol), and the first resource element may occupy a symbol in time domain. In frequency domain, the first resource element may include one or more second resource elements, for example, denoted as Q second resource elements. In other words, the first resource element may include the Q second resource elements in frequency domain. Q is a positive integer. For example, Q may be 4, may be a power of 2 (for example, 4, 8, 16, or 32), may be a multiple of 10 (for example, 10, 20, or 30), or may be a multiple of 12 (for example, 12, 24, or 36). This is not limited.

A frequency range occupied in the time unit by the first resource element is equal to a first bandwidth. In an example, a frequency range of the first resource element at any moment in the time unit is less than the first bandwidth. For example, the time unit is a symbol, and a frequency range of the first resource element at any moment in the symbol is less than the first bandwidth. In another example, a frequency range of the first resource element at any moment in the time unit may alternatively be equal to the first bandwidth. In other words, resource configuration is performed on the first signal by using the first bandwidth as a granularity. For example, the time unit is a symbol, and a frequency of the first resource element at any moment in the symbol is equal to the first bandwidth. For ease of understanding, the following provides description by using an example in which the frequency range of the first resource element at any moment in the time unit is less than the first bandwidth.

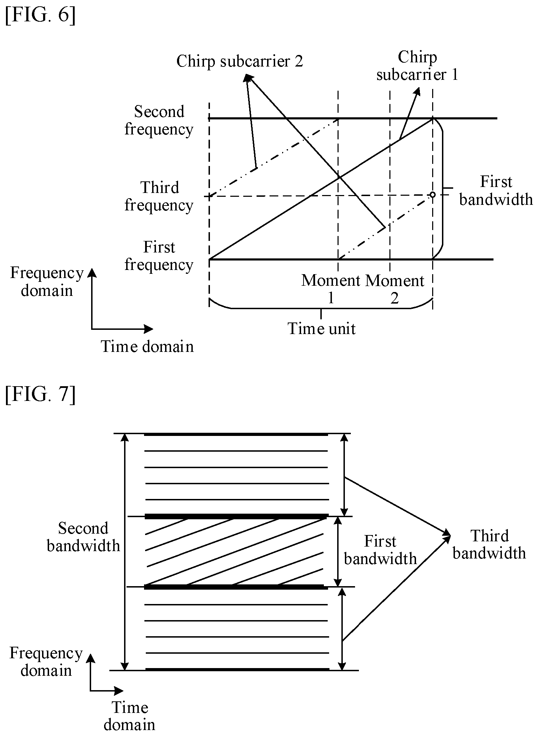

2. The second resource element may also be referred to as a sub resource element, a frequency domain unit, a chirp subcarrier, a subcarrier, or the like. A specific name of the second resource element is not limited in embodiments of this application. A frequency range occupied in the time unit by the second resource element is equal to the first bandwidth, as shown in FIG. 6. For example, the time unit is a symbol, and a frequency range occupied in the symbol by the second resource element is equal to the first bandwidth. FIG. 6 is shown by using an example in which the second resource element is referred to as a chirp subcarrier. In embodiments of this application, the frequency range occupied in the time unit by the first resource element and the frequency range occupied in the time unit by the second resource element are both equal to the first bandwidth. This means that a frequency of the second resource element may vary with time.

For example, the frequency of the second resource element may vary at different moments in the time unit. For example, the time unit is a symbol, and the frequency of the second resource element varies at different moments in the symbol. For example, it is assumed that the second resource element is referred to as a chirp subcarrier 1, and a moment 1 and a moment 2 are different moments in the time unit. In this case, a frequency of a chirp subcarrier at the moment 1 is different from a frequency of the chirp subcarrier at the moment 2, for example, a chirp subcarrier 1 and a chirp subcarrier 2 shown in FIG. 6.

In a possible design, an increase of the frequency of the second resource element over time within the time unit may be an increase from a lower boundary of the first bandwidth (for example, denoted as a first frequency, that is, the first frequency is a lowest frequency in the first bandwidth) to an upper boundary of the first bandwidth (for example, denoted as a second frequency, that is, the second frequency is a highest frequency in the first bandwidth), for example, the chirp subcarrier 1 shown in FIG. 6. In another possible design, an increase of the frequency of the second resource element over time within the time unit may be an increase from a third frequency to the second frequency (namely, the upper boundary of the first bandwidth), and then from the first frequency (namely, the lower boundary of the first bandwidth) to the third frequency, for example, the chirp carrier 2 shown in FIG. 6. The third frequency is greater than the first frequency and less than the second frequency.

A hollow circle in FIG. 6 indicates that if a frequency of the second resource element at a start moment of a time unit is equal to the third frequency, a frequency of the second resource element at an end moment of the time unit is close to the third frequency (for example, less than the third frequency), but is not equal to the third frequency. Alternatively, if a frequency of the second resource element at a start moment of a time unit is close to the third frequency (for example, greater than the third frequency), but is not equal to the third frequency, a frequency of the second resource element at an end moment of the time unit is equal to the third frequency. In addition, FIG. 6 is shown by using an example in which the frequency of the chirp subcarrier 2 at the moment 1 is the second frequency. It should be understood that, if the frequency of the chirp subcarrier 2 at the moment 1 is equal to the second frequency, a frequency of the chirp subcarrier 2 at a moment close to the moment 1 (for example, after the moment 1) is equal to the first frequency.

It should be noted that the moment in embodiments of this application may be understood as a sampling point or a sampling time point, or may be understood as a time concept smaller than a time unit granularity, for example, the moment 1 shown in FIG. 6.

The first bandwidth may be used for sensing. The first bandwidth may also be referred to as a chirp bandwidth, a sensing bandwidth, or the like. A specific name of the first bandwidth is not limited in embodiments of this application. In an example, the first bandwidth may be in a second bandwidth. The second bandwidth may include a bandwidth used to send a signal, the second bandwidth may include a bandwidth used to receive a signal, or the second bandwidth may include a bandwidth used to send a signal and a bandwidth used to receive a signal. For example, the second bandwidth may include one or more of the following: a bandwidth used by a first communication apparatus side to receive a signal, a bandwidth used by the first communication apparatus side to send a signal, a bandwidth used by a second communication apparatus side to receive a signal, or a bandwidth used by the second communication apparatus side to send a signal. For another example, the second bandwidth may be a carrier bandwidth, or may be a bandwidth part. This is not limited. For example, the second bandwidth may include the first bandwidth used for sensing and a third bandwidth used for communication, as shown in FIG. 7. In another example, the first bandwidth may alternatively be equal to the second bandwidth.

The first bandwidth may be predefined, may be configured (or allocated) by the first communication apparatus, or may be configured (or allocated) by a communication apparatus (for example, denoted as a third communication apparatus) other than the first communication apparatus. This is not limited. The third communication apparatus may be a network device or a component in the network device, or may be a terminal device or a component in the terminal device. A specific implementation form of the third communication apparatus is not limited in embodiments of this application. For example, the third communication apparatus may be the second communication apparatus, or may be a communication apparatus other than the first communication apparatus and the second communication apparatus (for example, both the first communication apparatus and the second communication apparatus are terminal devices, and the third communication apparatus may be a network device or another terminal device).

In a possible implementation, the first communication apparatus may send first information, where the first information may indicate the first bandwidth. For example, the first bandwidth is configured by the first communication apparatus, and the first communication apparatus may send the first information. For example, the first communication apparatus may send the first information to the second communication apparatus. Correspondingly, the second communication apparatus may receive the first information from the first communication apparatus. Further, the second communication apparatus may determine the first bandwidth based on the first information.

In another possible implementation, the first communication apparatus may receive first information, where the first information may indicate the first bandwidth. For example, the first bandwidth is configured by the third communication apparatus, and the first communication apparatus may receive the first information. For example, the third communication apparatus may send the first information to the first communication apparatus. Correspondingly, the first communication apparatus may receive the first information from the third communication apparatus. Further, the first communication apparatus may determine the first bandwidth based on the first information. For another example, if the third communication apparatus is not the second communication apparatus, the third communication apparatus may further send the first information to the second communication apparatus. Correspondingly, the second communication apparatus may receive the first information from the third communication apparatus. Further, the second communication apparatus may determine the first bandwidth based on the first information.

In a possible implementation, that the first information indicates the first bandwidth may be specifically: The first information may indicate the upper boundary of the first bandwidth and the lower boundary of the first bandwidth; the first information may indicate the upper boundary of the first bandwidth and a width of the first bandwidth; the first information may indicate the lower boundary of the first bandwidth and the width of the first bandwidth; the first information may indicate a frequency spacing between the upper boundary of the first bandwidth and an upper boundary of the second bandwidth and a frequency spacing between the lower boundary of the first bandwidth and a lower boundary of the second bandwidth; the first information may indicate the frequency spacing between the upper boundary of the first bandwidth and the upper boundary of the second bandwidth and the width of the first bandwidth; the first information may indicate the frequency spacing between the lower boundary of the first bandwidth and the lower boundary of the second bandwidth and the width of the first bandwidth; or the like. It may be understood that a specific implementation form of the first information is not limited in embodiments of this application.

Optionally, the first information may be carried in RRC layer signaling, or may be carried in MAC layer signaling. This is not limited.

The following describes two resource configuration schemes (for example, denoted as a resource configuration scheme 1 and a resource configuration scheme 2) provided in embodiments of this application.

### 1. Resource configuration scheme 1

In the resource configuration scheme 1, the first signal may occupy N first resource elements. FIG. 5 is shown by using an example in which the first signal occupies the N first resource elements. Correspondingly, the first communication apparatus may send the first signal based on the N first resource elements. N is a positive integer. A frequency range occupied in the time unit by the N first resource elements is equal to the first bandwidth. Any one of the N first resource elements includes Q second resource elements, and a frequency range occupied in the time unit by any one of the Q second resource elements is also equal to the first bandwidth. For the first resource element, the second resource element, and the first bandwidth, refer to the foregoing content. Details are not described again.

In a possible implementation, the N first resource elements may belong to M first resource elements, that is, the M first resource elements include the N first resource elements. A frequency unit occupied in the time unit by the M first resource elements is equal to the first bandwidth. M is an integer greater than or equal to N. The M first resource elements may be understood as first resource elements included in the first bandwidth in the time unit. In other words, the first bandwidth may be divided into the M first resource elements in the time unit. Correspondingly, the first resource element occupied by the first signal may be the M first resource elements, or may be a part of the M first resource elements.

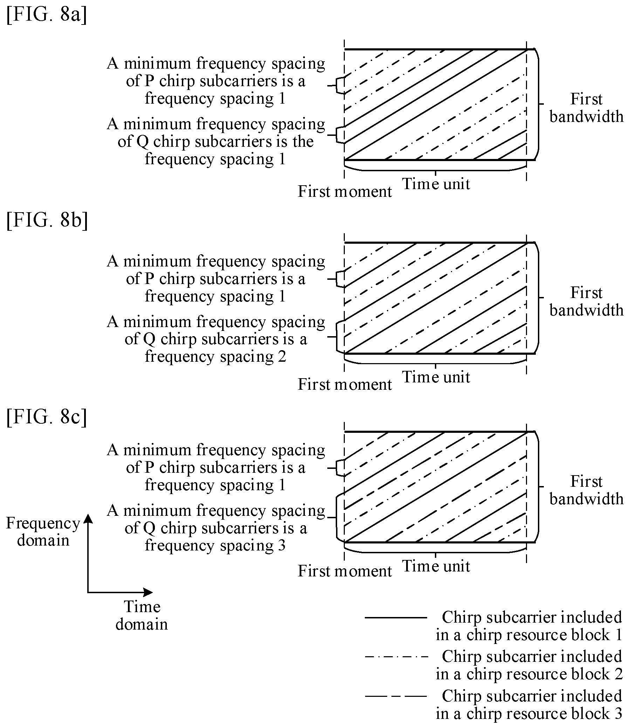

Any one of the N first resource elements occupied by the first signal may be distributed (or allocated) in a centralized manner, or may be distributed (or allocated) in a distributed manner. This is not limited. It is assumed that Q is greater than 1, the M first resource elements include P second resource elements, and P is an integer greater than or equal to Q. In a possible design, at a first moment in the time unit, a frequency spacing between two second resource elements having a minimum frequency spacing among the Q second resource elements is equal to a frequency spacing between two second resource elements having a minimum frequency spacing among the P second resource elements, as shown in FIG. 8a. In other words, the Q second resource elements are Q consecutive second resource elements, for example, Q second resource elements with consecutive numbers (or index numbers). FIG. 8a to FIG. 8c are shown by using an example in which the first resource element is referred to as a chirp resource block, and the second resource element is a chirp subcarrier. As shown in FIG. 8a, the first bandwidth is divided into two chirp resource blocks in the time unit, that is, M is 2. The two chirp resource blocks are respectively denoted as a chirp resource block 1 and a chirp resource block 2, where each chirp resource block includes three chirp subcarriers (that is, Q is 3, and P is 6). A frequency spacing between two chirp subcarriers having a minimum frequency spacing at the first moment in the six chirp subcarriers included in the chirp resource block 1 and the chirp resource block 2 is a frequency spacing 1, and a frequency spacing between two chirp subcarriers having a minimum frequency spacing at the first moment in the three chirp subcarriers included in the chirp resource block 1 (or the chirp resource block 2) is also the frequency spacing 1.

The first moment is any moment in the time unit. For descriptions of the moment, refer to the foregoing content. Details are not described again. FIG. 8a to FIG. 8c are shown by using an example in which the first moment is the start moment of the time unit. The two second resource elements having the minimum frequency spacing may be understood as two adjacent second resource elements, for example, two second resource elements with adjacent numbers (or index numbers). It may be understood that, if the first resource element includes two second resource elements, the two second resource elements may be two second resource elements having a minimum frequency spacing at the first moment; or if a quantity of second resource elements included in the first resource element is greater than 2, there may be a plurality of groups of two second resource elements having a minimum frequency spacing at the first moment in the first resource element.

In another possible design, at a first moment in the time unit, a frequency spacing between two second resource elements having a minimum frequency spacing among the Q second resource elements is greater than a frequency spacing between two second resource elements having a minimum frequency spacing among the P second resource elements, as shown in FIG. 8b or FIG. 8c. In other words, the Q second resource elements are Q non-consecutive second resource elements, for example, Q second resource elements with non-consecutive numbers (or index numbers). As shown in FIG. 8b, the first bandwidth is divided into two chirp resource blocks in the time unit, that is, M is 2. The two chirp resource blocks are respectively denoted as a chirp resource block 1 and a chirp resource block 2, where each chirp resource block includes three chirp subcarriers (that is, Q is 3, and P is 6). A frequency spacing between two chirp subcarriers having a minimum frequency spacing at the first moment in the six chirp subcarriers included in the chirp resource block 1 and the chirp resource block 2 is a frequency spacing 1, and a frequency spacing between two chirp subcarriers having a minimum frequency spacing at the first moment in the three chirp subcarriers included in the chirp resource block 1 (or the chirp resource block 2) is a frequency spacing 2. The frequency spacing 2 is greater than the frequency spacing 1.

As shown in FIG. 8c, the first bandwidth is divided into three chirp resource blocks in the time unit, that is, M is 3. The three chirp resource blocks are respectively denoted as a chirp resource block 1, a chirp resource block 2, and a chirp resource block 3, where each chirp resource block includes two chirp subcarriers (that is, Q is 3, and P is 6). A frequency spacing between two chirp subcarriers having a minimum frequency spacing at the first moment in the six chirp subcarriers included in the chirp resource block 1, the chirp resource block 2, and the chirp resource block 3 is a frequency spacing 1, and a frequency spacing between two chirp subcarriers having a minimum frequency spacing at the first moment in the two chirp subcarriers included in the chirp resource block 1 (or the chirp resource block 2 or the chirp resource block 3) is a frequency spacing 3. The frequency spacing 3 is greater than the frequency spacing 1.

Optionally, in FIG. 8b or FIG. 8c, at the first moment, a frequency spacing between two chirp subcarriers having a minimum frequency spacing among the chirp subcarriers in the chirp resource block 1 and the chirp subcarriers in the chirp resource block 2 is equal to a frequency spacing between two chirp subcarriers having a minimum frequency spacing among the P chirp subcarriers. Optionally, in FIG. 8c, at the first moment, a frequency spacing between two chirp subcarriers having a minimum frequency spacing among the chirp subcarriers in the chirp resource block 1 and the chirp subcarriers in the chirp resource block 3 is equal to a frequency spacing between two chirp subcarriers having a minimum frequency spacing among the P chirp subcarriers. Optionally, in FIG. 8c, at the first moment, a frequency spacing between two chirp subcarriers having a minimum frequency spacing among the chirp subcarriers in the chirp resource block 2 and the chirp subcarriers in the chirp resource block 3 is equal to a frequency spacing between two chirp subcarriers having a minimum frequency spacing among the P chirp subcarriers.

In still another possible design, at a first moment in the time unit, a frequency spacing between two second resource elements having a minimum frequency spacing among the Q second resource elements is equal to K times a frequency spacing between two second resource elements having a minimum frequency spacing among the P second resource elements. K may be 1, as shown in FIG. 8a. Alternatively, K may be greater than 1, as shown in FIG. 8b or FIG. 8c. Optionally, K may be a multiple of 2 (for example, 4, 6, 8, or 10), may be a multiple of 3 (for example, 3, 6, 9, or 12), may be a multiple of 5 (for example, 5, 10, 15, or 20), or may be a multiple of 10 (for example, 10, 20, 30, or 40). This is not limited.

The N first resource elements may be predefined, or may be configured (or allocated) by the first communication apparatus, or may be configured (or allocated) by a third communication apparatus. This is not limited. For descriptions of the third communication apparatus, refer to the foregoing content. Details are not described again. For example, the first communication apparatus may determine the N first resource elements.

In a possible implementation, the first communication apparatus may send second information, where the second information may indicate the N first resource elements. For example, the N first resource elements are configured by the first communication apparatus, and the first communication apparatus may send the second information. For example, the first communication apparatus may send the second information to the second communication apparatus. Correspondingly, the second communication apparatus may receive the second information from the first communication apparatus. Further, the second communication apparatus may determine the N first resource elements based on the second information.

In another possible implementation, the first communication apparatus may receive second information, where the second information may indicate the N first resource elements. For example, the N first resource elements are configured by the third communication apparatus, and the first communication apparatus may receive the second information. For example, the third communication apparatus may send the second information to the first communication apparatus. Correspondingly, the first communication apparatus may receive the second information from the third communication apparatus. Further, the first communication apparatus may determine the N first resource elements based on the second information. For another example, if the third communication apparatus is not the second communication apparatus, the third communication apparatus may further send the second information to the second communication apparatus. Correspondingly, the second communication apparatus may receive the second information from the third communication apparatus. Further, the second communication apparatus may determine the N first resource elements based on the second information.

In a possible implementation, that the second information indicates the N first resource elements may be specifically: The second information may indicate a start location and a quantity of the N first resource elements; the second information may indicate the N first resource elements by using a bitmap; or the like. It may be understood that a specific implementation form of the second information is not limited in embodiments of this application.

Optionally, the second information may be carried in downlink control information (downlink control information, DCI). This is not limited.

In the resource configuration scheme 1, resource configuration is performed by using the first resource element as a granularity, the frequency range occupied in the time unit by the N first resource elements is equal to the first bandwidth, and the frequency range occupied in the time unit by any one of the Q second resource elements included in the first resource element is also equal to the first bandwidth. This means that the frequency of the second resource element may vary with time, to be applicable to a chirp multiplexing waveform in which a frequency varies with time. Therefore, resource configuration in an integrated sensing and communication scenario can be adapted.

### 2. Resource configuration scheme 2

In the resource configuration scheme 2, the first signal may occupy H second resource elements. Correspondingly, the first communication apparatus may send the first signal based on the H second resource elements. H is a positive integer. A frequency range occupied in the time unit by the H second resource elements is equal to the first bandwidth, and a frequency range occupied in the time unit by any one of the H second resource elements is also equal to the first bandwidth. For the second resource element and the first bandwidth, refer to the foregoing content. Details are not described again.

In an example, a frequency range of the H second resource elements at any moment in the time unit may be less than the first bandwidth. For example, the time unit is a symbol, and a frequency range of the H second resource elements at any moment in the symbol may be less than the first bandwidth. In another example, a frequency range of the H second resource elements at any moment in the time unit may alternatively be equal to the first bandwidth. In other words, resource configuration is performed on the first signal by using the first bandwidth as a granularity. For example, the time unit is a symbol, and a frequency of the H second resource elements at any moment in the symbol is equal to the first bandwidth. For ease of understanding, the following provides description by using an example in which the frequency range of the H second resource elements at any moment in the time unit is less than the first bandwidth.

In a possible implementation, the H second resource elements may belong to P second resource elements, that is, the P second resource elements include the H second resource elements. A frequency unit occupied in the time unit by the P second resource elements is equal to the first bandwidth. P is an integer greater than or equal to H. The P second resource elements may be understood as second resource elements included in the first bandwidth in the time unit. In other words, the first bandwidth may be divided into the P second resource elements in the time unit. Correspondingly, the second resource element occupied by the first signal may be the P second resource elements, or may be a part of the P second resource elements.

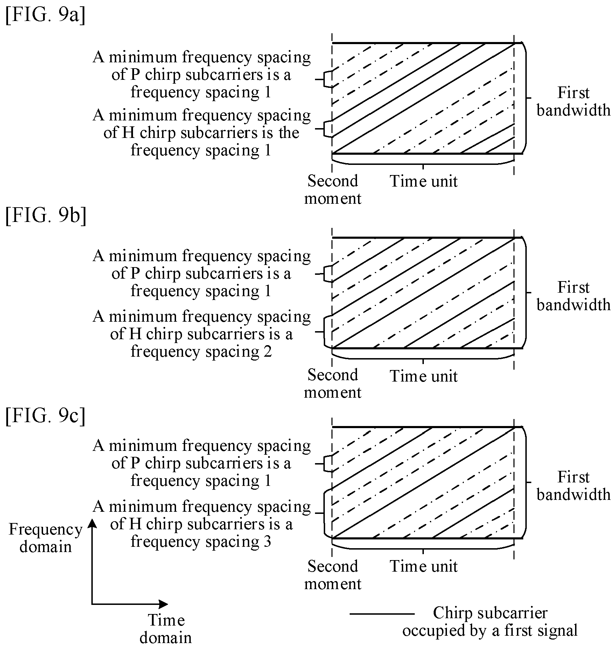

It is assumed that H is greater than 1. The H second resource elements occupied by the first signal may be distributed (or allocated) in a centralized manner, or may be distributed (or allocated) in a distributed manner. This is not limited. In a possible design, at a second moment in the time unit, a frequency spacing between two second resource elements having a minimum frequency spacing among the H second resource elements is equal to a frequency spacing between two second resource elements having a minimum frequency spacing among the P second resource elements, as shown in FIG. 9a. In other words, the H second resource elements are H consecutive second resource elements, for example, H second resource elements with consecutive numbers (or index numbers). FIG. 9a to FIG. 9c are shown by using an example in which the second resource element is a chirp subcarrier. As shown in FIG. 9a, the first bandwidth is divided into six chirp subcarriers in the time unit (that is, P is 6), and the first signal occupies three of the chirp subcarriers (that is, H is 3). A frequency spacing between two chirp subcarriers having a minimum frequency spacing at the second moment in the P chirp subcarriers is a frequency spacing 1, and a frequency spacing between two chirp subcarriers having a minimum frequency spacing at the second moment in the three chirp subcarriers occupied by the first signal is also the frequency spacing 1.

The second moment is any moment in the time unit. For descriptions of the moment, refer to the foregoing content. Details are not described again. FIG. 9a to FIG. 9c are shown by using an example in which the second moment is the start moment of the time unit. The two second resource elements having the minimum frequency spacing may be understood as two adjacent second resource elements, for example, two second resource elements with adjacent numbers (or index numbers). It may be understood that, if H is greater than 2, there may be a plurality of groups of two second resource elements having a minimum frequency spacing at the second moment in the H second resource elements.

In another possible design, at second time in the time unit, a frequency spacing between two second resource elements having a minimum frequency spacing among the H second resource elements is greater than a frequency spacing between two second resource elements having a minimum frequency spacing among the P second resource elements. Refer to FIG. 9b or FIG. 9c. In other words, the H second resource elements are H non-consecutive second resource elements, for example, H second resource elements with non-consecutive numbers (or index numbers). As shown in FIG. 9b, the first bandwidth is divided into six chirp subcarriers in the time unit (that is, P is 6), and the first signal occupies three of the chirp subcarriers (that is, H is 3). A frequency spacing between two chirp subcarriers having a minimum frequency spacing at the second moment in the P chirp subcarriers is also the frequency spacing 1, and a frequency spacing between two chirp subcarriers having a minimum frequency spacing at the second moment in the three chirp subcarriers occupied by the first signal is a frequency spacing 2. The frequency spacing 2 is greater than the frequency spacing 1.

As shown in FIG. 9c, the first bandwidth is divided into six chirp subcarriers in the time unit (that is, P is 6), and the first signal occupies two of the chirp subcarriers (that is, H is 2). A frequency spacing between two chirp subcarriers having a minimum frequency spacing at the second moment in the P chirp subcarriers is also the frequency spacing 1, and a frequency spacing between two chirp subcarriers having a minimum frequency spacing at the second moment in the two chirp subcarriers occupied by the first signal is a frequency spacing 3. The frequency spacing 3 is greater than the frequency spacing 1.

In still another possible design, at the second moment in the time unit, a frequency spacing between two second resource elements having a minimum frequency spacing among the H second resource elements is equal to J times a frequency spacing between two second resource elements having a minimum frequency spacing among the P second resource elements. J may be 1, as shown in FIG. 9a. Alternatively, J may be greater than 1, as shown in FIG. 9b or FIG. 9c. Optionally, J may be a multiple of 2 (for example, 4, 6, 8, or 10), may be a multiple of 3 (for example, 3, 6, 9, or 12), may be a multiple of 5 (for example, 5, 10, 15, or 20), or may be a multiple of 10 (for example, 10, 20, 30, or 40). This is not limited.

The H second resource elements may be predefined, or may be configured (or allocated) by the first communication apparatus, or may be configured (or allocated) by a third communication apparatus. This is not limited. For descriptions of the third communication apparatus, refer to the foregoing content. Details are not described again. For example, the first communication apparatus may determine the H second resource elements.

In a possible implementation, the first communication apparatus may send third information, where the third information may indicate the H second resource elements. For example, the H second resource elements are configured by the first communication apparatus, and the first communication apparatus may send the third information. For example, the first communication apparatus may send the third information to the second communication apparatus. Correspondingly, the second communication apparatus may receive the third information from the first communication apparatus. Further, the second communication apparatus may determine the H second resource elements based on the third information.

In another possible implementation, the first communication apparatus may receive third information, where the third information may indicate the H second resource elements. For example, the H second resource elements are configured by the third communication apparatus, and the first communication apparatus may receive the third information. For example, the third communication apparatus may send the third information to the first communication apparatus. Correspondingly, the first communication apparatus may receive the third information from the third communication apparatus. Further, the first communication apparatus may determine the H second resource elements based on the third information. For another example, if the third communication apparatus is not the second communication apparatus, the third communication apparatus may further send the third information to the second communication apparatus. Correspondingly, the second communication apparatus may receive the third information from the third communication apparatus. Further, the second communication apparatus may determine the H second resource elements based on the third information.

In a possible implementation, that the third information indicates the H second resource elements may be specifically: The third information may indicate a start second resource element and a quantity of the H second resource elements; the third information may indicate the H second resource elements by using a bitmap; or the like. It may be understood that a specific implementation form of the third information is not limited in embodiments of this application.

Optionally, the third information may be carried in downlink control information (downlink control information, DCI). This is not limited.

In the foregoing resource configuration scheme 2, resource configuration is performed by using the second resource element as a granularity, and the frequency range occupied in the time unit by the second resource element is also equal to the first bandwidth. This means that the frequency of the second resource element may vary with time, to be applicable to a chirp multiplexing waveform in which a frequency varies with time. Therefore, resource configuration in an integrated sensing and communication scenario can be adapted.

S502: The second communication apparatus receives the first signal.

Alternatively, the second communication apparatus may receive an echo signal of the first signal.

For example, the second communication apparatus may determine a resource used to transmit (or carry) the first signal, and receive the first signal based on the resource. For example, the second communication apparatus may receive or send first information, where the first information indicates the first bandwidth. For details, refer to related content in S501. Details are not described again. In an example, if resource configuration is performed on the first signal in the resource configuration scheme 1, the second communication apparatus may determine the N first resource elements. For example, the second communication apparatus may receive or send second information, where the second information may indicate the N first resource elements. For details, refer to related content in S501. Details are not described again. In another example, if resource configuration is performed on the first signal in the resource configuration scheme 2, the second communication apparatus may determine the H second resource elements. For example, the second communication apparatus may receive or send third information, where the third information may indicate the H second resource elements. For details, refer to related content in S501. Details are not described again.

Optionally, the foregoing method may further include: The first communication apparatus performs sensing processing on the first signal. This is not shown in FIG. 5.

The embodiment shown in FIG. 5 may be applied to the scenario shown in any one of FIG. 3c, FIG. 3d, FIG. 3e, or FIG. 3f. The following describes the embodiment shown in FIG. 5 by using an example in which the first communication apparatus is a network device, the second communication apparatus is a terminal device, and resource configuration is performed on the first signal in the resource configuration scheme 1.

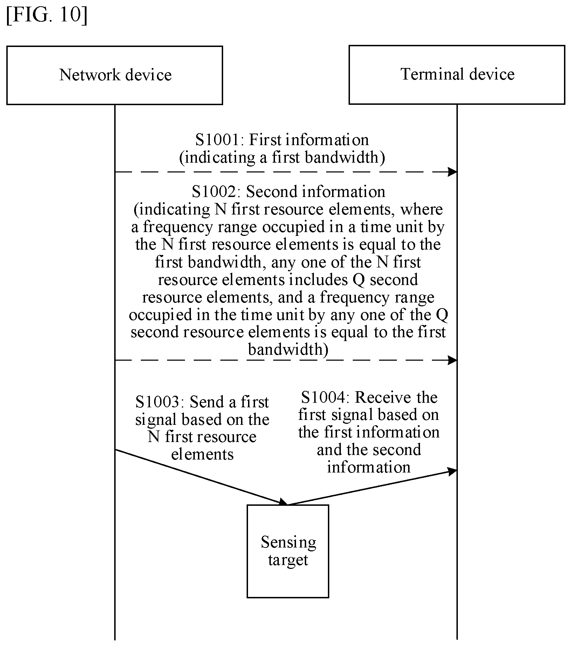

FIG. 10 shows an example of a schematic flowchart of a communication method according to an embodiment of this application. In this embodiment, the first communication apparatus is a network device, the second communication apparatus is a terminal device, and resource configuration is performed on the first signal in the resource configuration scheme 1. In other words, FIG. 10 is shown by using the scenario shown in FIG. 3e as an example. It should be understood that, for a specific implementation process in which this embodiment of this application is applicable to the scenario shown in FIG. 3c, FIG. 3d, or FIG. 3f, refer to the descriptions in FIG. 10. As shown in FIG. 10, the method may further include the following content.

S1001: The network device sends first information to the terminal device. Correspondingly, the terminal device receives the first information from the network device.

S1001 is an optional step, and is represented by a dashed line in FIG. 10. The first information may indicate a first bandwidth. For details, refer to related content in S501. Details are not described again.

S1002: The network device sends second information to the terminal device. Correspondingly, the terminal device receives the second information from the network device.

S1002 is an optional step, and is represented by a dashed line in FIG. 10. The second information may indicate N first resource elements. A frequency range occupied in a time unit by the N first resource elements is equal to the first bandwidth, any one of the N first resource elements includes Q second resource elements, and a frequency range occupied in the time unit by any one of the Q second resource elements is equal to the first bandwidth. For details, refer to related content in S501. Details are not described again.

S1003: The network device sends a first signal. For example, the network device sends the first signal based on the N first resource elements.

S1004: The terminal device receives the first signal based on the first information and the second information. Alternatively, the terminal device receives an echo signal of the first signal based on the first information and the second information.

For example, the terminal device determines the N first resource elements based on the first information and the second information, and receives the first signal based on the N first resource elements. Optionally, the terminal device may further perform sensing processing on the first signal. This is not shown in FIG. 10.

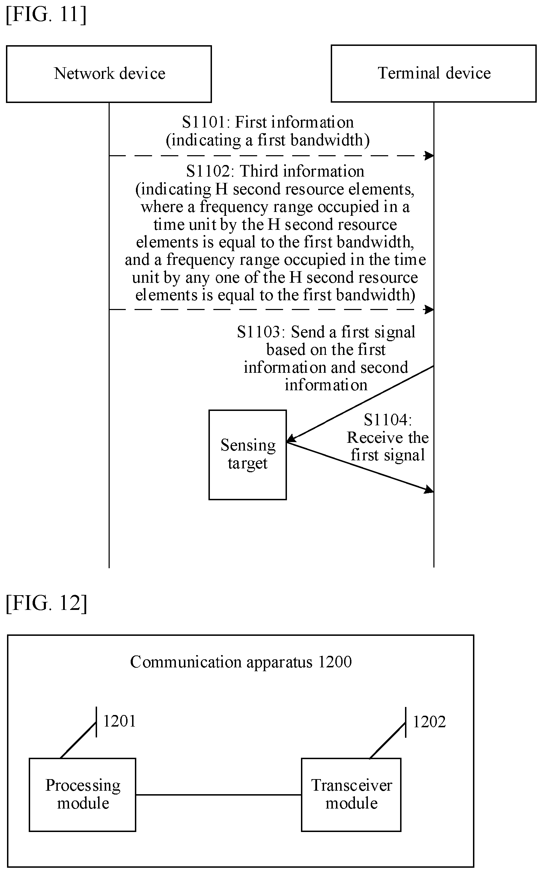

In another possible implementation, this embodiment of this application may be further applied to the scenario shown in FIG. 3a or FIG. 3b. In other words, the first communication apparatus and the second communication apparatus may be a same communication apparatus. The following describes this scenario with reference to FIG. 11.

FIG. 11 shows an example of a schematic flowchart of a communication method according to an embodiment of this application. In this embodiment, the third communication apparatus is a network device, the first communication apparatus is a terminal device, the first communication apparatus and the second communication apparatus are a same communication apparatus, and resource configuration is performed on the first signal in the resource configuration scheme 2. In other words, FIG. 11 is shown by using the scenario shown in FIG. 3b as an example. It should be understood that, for a specific implementation process in which this embodiment of this application is applicable to the scenario shown in FIG. 3a, refer to the descriptions in FIG. 11. As shown in FIG. 11, the method may further include the following content.

S1101: The network device sends first information to the terminal device. Correspondingly, the terminal device receives the first information from the network device.

S1101 is an optional step, and is represented by a dashed line in FIG. 11. The first information may indicate a first bandwidth. For details, refer to related content in S501. Details are not described again.

S1102: The network device sends third information to the terminal device. Correspondingly, the terminal device receives the third information from the network device.

S1102 is an optional step, and is represented by a dashed line in FIG. 11. The third information may indicate H second resource elements. A frequency range occupied in a time unit by the H second resource elements is equal to the first bandwidth, and a frequency range occupied in the time unit by any one of the H second resource elements is equal to the first bandwidth. For details, refer to related content in S501. Details are not described again.

S1103: The terminal device sends a first signal based on the first information and second information. For example, the terminal device determines the H second resource elements based on the first information and the second information, and sends the first signal based on the H second resource elements.

S1104: The terminal device receives the first signal. Alternatively, the terminal device receives an echo signal of the first signal.

For example, the terminal device may receive the first signal based on the H second resource elements. Optionally, the terminal device may further perform sensing processing on the first signal. This is not shown in FIG. 11.

In embodiments provided in this application, the method provided in embodiments of this application is described from respective perspectives of interaction between a first communication apparatus and a second communication apparatus. Steps performed by the communication apparatus (for example, the first communication apparatus or the second communication apparatus) may be implemented by different function entities included in the terminal device. The communication apparatus (for example, the first communication apparatus or the second communication apparatus) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

The following describes, with reference to the accompanying drawings, communication apparatuses configured to implement the foregoing methods in embodiments of this application. Therefore, all the foregoing content may be used in the following embodiments. Repeated content is not described again.

FIG. 12 is an example of a diagram of a structure of a communication apparatus 1200. The communication apparatus 1200 can implement functions or steps implemented by the first communication apparatus or the second communication apparatus in the foregoing method embodiments.

For example, the communication apparatus 1200 may be a network device or a component (for example, a DU or an RU) in the network device, or a terminal device or a component in the terminal device.

In an implementation, the communication apparatus 1200 may include a processing module 1201 and a transceiver module 1202. The processing module 1201 may be configured to perform data processing, for example, perform the foregoing method embodiments. The processing module 1201 may also be referred to as a processing unit, or the like. The processing module 1201 may be implemented by at least one processor or a processor-related circuit. The transceiver module 1202 may be configured to implement a corresponding communication function, for example, receive or send related data, information, or a message. The transceiver module 1202 may also be referred to as a communication interface, a communication module, a transceiver unit, or the like. The transceiver module 1202 may be implemented by a transceiver or a transceiver-related circuit.

It should be noted that the communication apparatus 1200 may include the processing module 1201, but does not include the transceiver module 1202. Alternatively, the communication apparatus 1200 may include the transceiver module 1202, but does not include the processing module 1201. This may specifically depend on whether the foregoing solutions performed by the communication apparatus 1200 include a processing action and transmit and receive actions.

Optionally, the transceiver module 1202 may include a sending module and a receiving module. The sending module is configured to perform a sending operation in the foregoing method embodiments. The receiving module is configured to perform a receiving operation in the foregoing method embodiments.

It should be noted that the communication apparatus 1200 may include the sending module, but does not include the receiving module. Alternatively, the communication apparatus 1200 may include the receiving module, but does not include the sending module. This may specifically depend on whether the foregoing solutions performed by the communication apparatus 1200 include a sending action and a receiving action.

Optionally, the communication apparatus 1200 may further include a storage module, not shown in FIG. 12. The storage module may be implemented by at least one memory. The storage module may be configured to store instructions and/or data, and the processing module 1201 may read the instructions and/or the data in the storage module, to cause the communication apparatus 1200 to implement the foregoing method embodiments.

Optionally, the communication apparatus 1200 may be a chip system. The chip system may include a chip, or may include a chip and another discrete component. This is not limited. The transceiver module 1202 may be an input/output interface of a chip (for example, a baseband chip). The processing module 1201 may be a processor of the chip system.

In a first implementation, the communication apparatus 1200 can implement a function of the first communication apparatus, and may specifically perform the following content: The processing module 1201 is configured to determine N first resource elements. The transceiver module 1202 is configured to send a first signal based on the N first resource elements. Alternatively, the transceiver module 1202 is configured to send a first signal, where the first signal occupies N first resource elements. A frequency range occupied in a time unit by the N first resource elements is equal to a first bandwidth, any one of the N first resource elements includes Q second resource elements, and a frequency range occupied in the time unit by any one of the Q second resource elements is equal to the first bandwidth.

In a possible implementation, the transceiver module 1202 may be further configured to send first information, or may be further configured to receive first information. The first information indicates the first bandwidth.

In a possible implementation, the transceiver module 1202 may be further configured to send second information, or may be further configured to receive second information. The second information indicates the N first resource elements.

In a second implementation, the communication apparatus 1200 can implement a function of the first communication apparatus, and may specifically perform the following content: The processing module 1201 is configured to determine H second resource elements. The transceiver module 1202 is configured to send a first signal based on the H second resource elements. Alternatively, the transceiver module 1202 is configured to send a first signal, where the first signal occupies H second resource elements. A frequency range occupied in a time unit by the H second resource elements is equal to a first bandwidth, and a frequency range occupied in the time unit by any one of the H second resource elements is equal to the first bandwidth.

In a possible implementation, the transceiver module 1202 may be further configured to send first information, or may be further configured to receive first information. The first information indicates the first bandwidth.

In a possible implementation, the transceiver module 1202 may be further configured to send third information, or may be further configured to receive third information. The third information indicates the H second resource elements.

In a third implementation, the communication apparatus 1200 can implement a function of the second communication apparatus, and may specifically perform the following content: The processing module 1201 is configured to determine N first resource elements. The transceiver module 1202 is configured to receive a first signal based on the N first resource elements. Alternatively, the transceiver module 1202 is configured to receive a first signal, where the first signal occupies N first resource elements. A frequency range occupied in a time unit by the N first resource elements is equal to a first bandwidth, any one of the N first resource elements includes Q second resource elements, and a frequency range occupied in the time unit by any one of the Q second resource elements is equal to the first bandwidth.

In a possible implementation, the transceiver module 1202 may be further configured to send first information, or may be further configured to receive first information. The first information indicates the first bandwidth.

In a possible implementation, the transceiver module 1202 may be further configured to send second information, or may be further configured to receive second information. The second information indicates the N first resource elements.

In a fourth implementation, the communication apparatus 1200 can implement a function of the second communication apparatus, and may specifically perform the following content: The processing module 1201 is configured to determine H second resource elements. The transceiver module 1202 is configured to receive a first signal based on the H second resource elements. Alternatively, the transceiver module 1202 is configured to receive a first signal, where the first signal occupies H second resource elements. A frequency range occupied in a time unit by the H second resource elements is equal to a first bandwidth, and a frequency range occupied in the time unit by any one of the H second resource elements is equal to the first bandwidth.

In a possible implementation, the transceiver module 1202 may be further configured to send first information, or may be further configured to receive first information. The first information indicates the first bandwidth.

In a possible implementation, the transceiver module 1202 may be further configured to send third information, or may be further configured to receive third information. The third information indicates the H second resource elements.

It should be understood that, more detailed descriptions of corresponding processes performed by the modules may be directly obtained by directly referring to related descriptions in the method embodiments. For brevity, details are not described herein again.

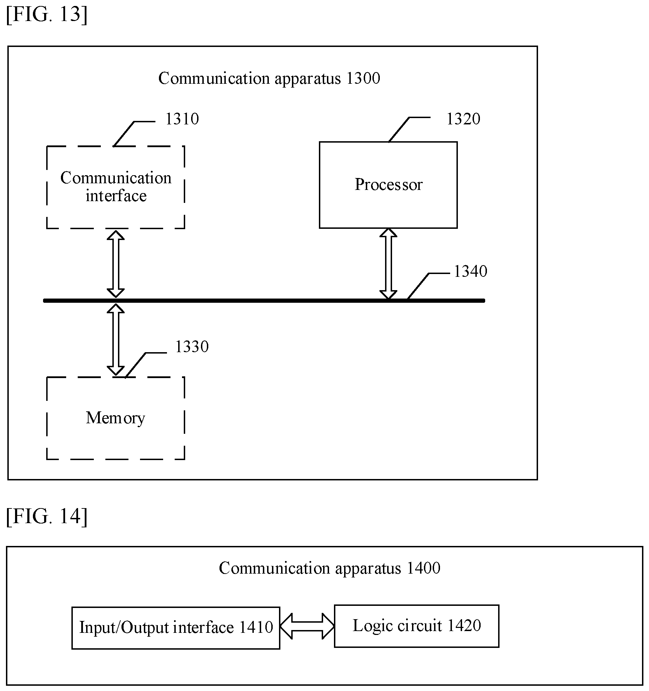

FIG. 13 is a diagram of a structure of a communication apparatus 1300 according to an embodiment of this application. The communication apparatus 1300 may include a processor 1320, configured to implement or support the communication apparatus 1300 in implementing functions of the first communication apparatus or the second communication apparatus in any one of the method embodiments of this application. For details, refer to the detailed descriptions in the foregoing method embodiments. Details are not described herein again. For example, the processor 1320 is configured to: read program instructions through a communication interface, and execute the program instructions, so that the communication apparatus 1300 implements a corresponding method. The processor 1320 may include one or more processors. This is not limited.

It should be noted that the foregoing functional module may be implemented by hardware, or may be implemented by a combination of the hardware and software. This is not limited. When the communication apparatus 1300 includes only the processor 1320, the communication apparatus 1300 may be a chip, or may be a chip system.

For example, the communication apparatus 1300 may be the chip system. The chip system may include a chip, or may include a chip and another discrete component. This is not limited.

Optionally, the communication apparatus 1300 may further include a memory 1330, configured to store program instructions and/or data. The memory 1330 is coupled to the processor 1320. Coupling may be understood as indirect coupling or a communication connection between apparatuses, units, or modules, may be in an electrical, mechanical, or another form, and is for information exchange between the apparatuses, the units, or the modules. The processor 1320 may operate in collaboration with the memory 1330. The processor 1320 and the memory 1330 may be integrated together, or may be disposed separately.

Further, the processor 1320 is configured to execute the program instructions stored in the memory 1330, so that the communication apparatus 1300 implements a corresponding method.

One or more memories in the memory 1330 may be included in the processor. Alternatively, the memory 1330 may exist independently, for example, an off-chip memory, and is connected to the processor 1320 through a communication bus (represented by a bold line 1340 in FIG. 13). The memory 1330 and the processor 1320 may alternatively be integrated together.

Optionally, the communication apparatus 1300 further includes the communication interface 1310 (represented by a dashed line in FIG. 13), configured to communicate with another device through a transmission medium, so that an apparatus in the communication apparatus 1300 may communicate with the another device. For example, when the communication apparatus is the first communication apparatus, the another device may be the second communication apparatus or the like. The processor 1320 may receive and send data through the communication interface 1310. For example, the processor 1320 may be configured to control the communication interface 1310 to receive and/or send a signal.

The communication interface 1310 may be specifically a transceiver. In terms of hardware implementation, the transceiver may be configured to implement the function of the transceiver module 1202, and the transceiver is integrated into the communication apparatus 1300 to constitute the communication interface 1310.

It should be noted that, the communication interface 1310 may have a sending function and a receiving function, and can implement signal receiving and sending; or may have a sending function, but does not have a receiving function, and is configured to implement signal sending; or may have a receiving function, but does not have a sending function, and is configured to implement signal receiving.

It should be noted that a specific connection medium between the communication interface 1310, the processor 1320, and the memory 1330 is not limited in this embodiment of this application. In FIG. 13, the memory 1330, the processor 1320, and the communication interface 1310 are connected through the communication bus 1340. A manner of connection between other components is merely an example for description, and is not limited thereto. The communication bus 1340 may be classified into an address bus, a data bus, a control bus, and the like. For ease of representation, only one bold line is used for representation in FIG. 13, but this does not mean that there is only one communication bus or one type of communication bus.

In this embodiment of this application, the processor 1320 may be a general-purpose processor, a digital signal processor, an application-specific integrated circuit, a field programmable gate array or another programmable logic device, a discrete gate or a transistor logic device, or a discrete hardware component. The general-purpose processor may be a microprocessor, any conventional processor, or the like. The methods disclosed with reference to embodiments of this application may be performed and completed by hardware in the processor, or may be performed and completed by a combination of the hardware in the processor and software.

In this embodiment of this application, the memory 1330 may be a non-volatile memory like a hard disk drive (hard disk drive, HDD) or a solid-state drive (solid-state drive, SSD), or may be a volatile memory (volatile memory) like a random access memory (random access memory, RAM). Alternatively, the memory may be any other medium that is for carrying or storing program code in a form of instructions or a data structure and that can be accessed by a computer, or may be a circuit, or any other apparatus that can implement a storage function, and is configured to store the program instructions and/or the data.

In an example, the communication apparatus 1300 may perform the following content: determining N first resource elements, and sending a first signal based on the N first resource elements; or sending a first signal, where the first signal occupies N first resource elements. A frequency range occupied in a time unit by the N first resource elements is equal to a first bandwidth, any one of the N first resource elements includes Q second resource elements, and a frequency range occupied in the time unit by any one of the Q second resource elements is equal to the first bandwidth.

In another example, the communication apparatus 1300 may perform the following content: determining H second resource elements, and sending a first signal based on the H second resource elements; or sending a first signal, where the first signal occupies H second resource elements. A frequency range occupied in a time unit by the H second resource elements is equal to a first bandwidth, and a frequency range occupied in the time unit by any one of the H second resource elements is equal to the first bandwidth.

In another example, the communication apparatus 1300 may perform the following content: determining N first resource elements, and receiving a first signal based on the N first resource elements; or receiving a first signal, where the first signal occupies N first resource elements. A frequency range occupied in a time unit by the N first resource elements is equal to a first bandwidth, any one of the N first resource elements includes Q second resource elements, and a frequency range occupied in the time unit by any one of the Q second resource elements is equal to the first bandwidth.

In another example, the communication apparatus 1300 may perform the following content: determining H second resource elements, and receiving a first signal based on the H second resource elements; or receiving a first signal, where the first signal occupies H second resource elements. A frequency range occupied in a time unit by the H second resource elements is equal to a first bandwidth, and a frequency range occupied in the time unit by any one of the H second resource elements is equal to the first bandwidth.

For a specific implementation process, refer to the foregoing method embodiments. Details are not described herein again.

Based on a same concept, refer to FIG. 14. An embodiment of this application further provides another communication apparatus 1400, including: an input/output interface 1410 and a logic circuit 1420, where the input/output interface 1410 is configured to receive code instructions and transmit the code instructions to the logic circuit 1420; and the logic circuit 1420 is configured to run the code instructions to perform the method performed by the first communication apparatus or the second communication apparatus in any one of the foregoing embodiments.

For example, the communication apparatus 1400 may be a network device or a component (for example, a DU and/or an RU) in the network device, or a terminal device or a component in the terminal device. For example, the communication apparatus 1400 can implement functions of the first communication apparatus or the second communication apparatus in the foregoing embodiments.

For example, the communication apparatus 1400 may determine N first resource elements, and send a first signal based on the N first resource elements. Alternatively, the communication apparatus 1400 may send a first signal, where the first signal occupies N first resource elements. A frequency range occupied in a time unit by the N first resource elements is equal to a first bandwidth, any one of the N first resource elements includes Q second resource elements, and a frequency range occupied in the time unit by any one of the Q second resource elements is equal to the first bandwidth.

For another example, the communication apparatus 1400 may determine H second resource elements, and send a first signal based on the H second resource elements. Alternatively, the communication apparatus 1400 may send a first signal, where the first signal occupies H second resource elements. A frequency range occupied in a time unit by the H second resource elements is equal to a first bandwidth, and a frequency range occupied in the time unit by any one of the H second resource elements is equal to the first bandwidth.

For another example, the communication apparatus 1400 may determine N first resource elements, and receive a first signal based on the N first resource elements. Alternatively, the communication apparatus 1400 may receive a first signal, where the first signal occupies N first resource elements. A frequency range occupied in a time unit by the N first resource elements is equal to a first bandwidth, any one of the N first resource elements includes Q second resource elements, and a frequency range occupied in the time unit by any one of the Q second resource elements is equal to the first bandwidth.

For another example, the communication apparatus 1400 may determine H second resource elements, and receive a first signal based on the H second resource elements. Alternatively, the communication apparatus 1400 may receive a first signal, where the first signal occupies H second resource elements. A frequency range occupied in a time unit by the H second resource elements is equal to a first bandwidth, and a frequency range occupied in the time unit by any one of the H second resource elements is equal to the first bandwidth.

The communication apparatus 1400 provided in this embodiment can implement the functions of the first communication apparatus or the second communication apparatus in the foregoing embodiments. Therefore, for technical effects that can be achieved by the communication apparatus 1400, refer to the foregoing method embodiments. Details are not described herein again.

An embodiment of this application further provides a communication system. The communication system may include one or more of the following: a first communication apparatus or a second communication apparatus. Optionally, the communication system may further include a third communication apparatus. For the first communication apparatus, the second communication apparatus, or the third communication apparatus, refer to the descriptions in the foregoing method embodiments. Details are not described again.

An embodiment of this application further provides a computer-readable storage medium, including program instructions. When the program instructions are run on a computer, the computer is enabled to perform the method or the steps performed by the first communication apparatus or the second communication apparatus in the foregoing embodiments.

An embodiment of this application further provides a computer program product, including program instructions. When the program instructions are run on a computer, the computer is enabled to perform the method or the steps performed by the first communication apparatus or the second communication apparatus in the foregoing embodiments.

An embodiment of this application provides a chip system. The chip system includes a processor, configured to implement the function (for example, perform a corresponding method or step) of the first communication apparatus or the second communication apparatus in the foregoing method. The chip system may include a chip, or may include a chip and another discrete component.

Optionally, the chip system further includes a memory. The memory is configured to store program instructions, so that the processor reads and executes the program instructions, to implement the corresponding method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more. For example, including at least one of A, B, and C means that A, B, C, A and B, A and C, B and C, or A, B, and C may be included. The term "and/or" describes an association relationship between associated objects and three relationships may specifically exist. For example, A and/or B may represent the following three cases: Only A exists, both A and B exist, and only B exists. In addition, the character "/" generally indicates an "or" relationship between the associated objects.

In addition, the terms "system" and "network" in embodiments of this application may be used interchangeably, and "according to" and "based on" may be used interchangeably.

Ordinal numerals such as "first" and "second" in embodiments of this application are typically for distinguishing between different objects, and are not for limiting a sequence, a time sequence, priorities, importance degrees, or the like of the plurality of objects. For example, the first communication apparatus and the second communication apparatus in embodiments of this application are for distinguishing between the two communication apparatuses, but do not limit priorities, importance degrees, or the like of the two communication apparatuses.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises: sending a first signal, wherein the first signal occupies N first resource elements, a frequency range occupied in a time unit by the N first resource elements is equal to a first bandwidth, any one of the N first resource elements comprises Q second resource elements, a frequency range occupied in the time unit by any one of the Q second resource elements is equal to the first bandwidth, and N and Q are positive integers.

2. A communication method, wherein the method comprises: receiving a first signal, wherein the first signal occupies N first resource elements, a frequency range occupied in a time unit by the N first resource elements is equal to a first bandwidth, any one of the N first resource elements comprises Q second resource elements, a frequency range occupied in the time unit by any one of the Q second resource elements is equal to the first bandwidth, and N and Q are positive integers.

3. The method according to claim 1 or 2, wherein the time unit is a symbol, the first resource element occupies the symbol in time domain, a frequency range of the first resource element at any moment in the symbol is less than the first bandwidth, and a frequency of the second resource element varies at different moments in the symbol.

4. The method according to any one of claims 1 to 3, wherein the frequency of the second resource element increases over time within the time unit from a first frequency to a second frequency; or the frequency of the second resource element increases over time within the time unit from a third frequency to a second frequency and then from a first frequency to the third frequency, wherein the first frequency is a lower boundary of the first bandwidth, and the second frequency is an upper boundary of the first bandwidth.

5. The method according to any one of claims 1 to 4, wherein the N first resource elements belong to M first resource elements, a frequency range occupied in the time unit by the M first resource elements is equal to the first bandwidth, and M is an integer greater than or equal to N.

6. The method according to claim 5, wherein Q is greater than 1, the M first resource elements comprise P second resource elements, and P is an integer greater than or equal to Q; and at a first moment in the time unit, a frequency spacing between two second resource elements having a minimum frequency spacing among the Q second resource elements is equal to a frequency spacing between two second resource elements having a minimum frequency spacing among the P second resource elements.

7. The method according to claim 5, wherein Q is greater than 1, the M first resource elements comprise P second resource elements, and P is an integer greater than or equal to Q; and at a first moment in the time unit, a frequency spacing between two second resource elements having a minimum frequency spacing among the Q second resource elements is greater than a frequency spacing between two second resource elements having a minimum frequency spacing among the P second resource elements; or at a first moment in the time unit, a frequency spacing between two second resource elements having a minimum frequency spacing among the Q second resource elements is equal to K times a frequency spacing between two second resource elements having a minimum frequency spacing among the P second resource elements, wherein K is an integer greater than 1.

8. The method according to any one of claims 1 to 7, wherein the method further comprises: sending first information, wherein the first information indicates the first bandwidth.

9. The method according to any one of claims 1 to 7, wherein the method further comprises: receiving first information, wherein the first information indicates the first bandwidth.

10. The method according to claim 8 or 9, wherein the first bandwidth is in a second bandwidth, and the second bandwidth is a carrier bandwidth or a bandwidth part.

11. The method according to any one of claims 1 to 8 and 10, wherein the method further comprises: sending second information, wherein the second information indicates the N first resource elements.

12. The method according to any one of claims 1 to 7 and 9 and 10, wherein the method further comprises: receiving second information, wherein the second information indicates the N first resource elements.

13. A communication method, wherein the method comprises: sending a first signal, wherein the first signal occupies H second resource elements, a frequency range occupied in a time unit by the H second resource elements is equal to a first bandwidth, a frequency range occupied in the time unit by any one of the H second resource elements is equal to the first bandwidth, and H is a positive integer.

14. A communication method, wherein the method comprises: receiving a first signal, wherein the first signal occupies H second resource elements, a frequency range occupied in a time unit by the H second resource elements is equal to a first bandwidth, a frequency range occupied in the time unit by any one of the H second resource elements is equal to the first bandwidth, and H is a positive integer.

15. The method according to claim 13 or 14, wherein the time unit is a symbol, the first signal occupies the symbol in time domain, a frequency range of the H second resource elements at any moment in the symbol is less than the first bandwidth, and a frequency of the second resource element varies at different moments in the symbol.

16. The method according to any one of claims 13 to 15, wherein the frequency of the second resource element increases over time within the time unit from a first frequency to a second frequency; or the frequency of the second resource element increases over time within the time unit from a third frequency to a second frequency and then from a first frequency to the third frequency, wherein the first frequency is a lower boundary of the first bandwidth, and the second frequency is an upper boundary of the first bandwidth.

17. The method according to any one of claims 13 to 16, wherein the H second resource elements belong to P second resource elements, a frequency range occupied in the time unit by the P second resource elements is equal to the first bandwidth, and P is an integer greater than or equal to H.

18. The method according to claim 17, wherein at a second moment in the time unit, a frequency spacing between two second resource elements having a minimum frequency spacing among the H second resource elements is equal to a frequency spacing between two second resource elements having a minimum frequency spacing among the P second resource elements.

19. The method according to claim 17, wherein at a second moment in the time unit, a frequency spacing between two second resource elements having a minimum frequency spacing among the H second resource elements is greater than a frequency spacing between two second resource elements having a minimum frequency spacing among the P second resource elements; or at a second moment in the time unit, a frequency spacing between two second resource elements having a minimum frequency spacing among the H second resource elements is equal to J times a frequency spacing between two second resource elements having a minimum frequency spacing among the P second resource elements, wherein J is an integer greater than 1.

20. The method according to any one of claims 13 to 19, wherein the method further comprises: sending first information, wherein the first information indicates the first bandwidth.

21. The method according to any one of claims 13 to 19, wherein the method further comprises: receiving first information, wherein the first information indicates the first bandwidth.

22. The method according to claim 20 or 21, wherein the first bandwidth is in a second bandwidth, and the second bandwidth is a carrier bandwidth or a bandwidth part.

23. The method according to any one of claims 12 to 20 and 22, wherein the method further comprises: sending third information, wherein the third information indicates the H second resource elements.

24. The method according to any one of claims 13 to 19 and 21 and 22, wherein the method further comprises: receiving third information, wherein the third information indicates the H second resource elements.

25. A communication apparatus, comprising a module for performing the method according to any one of claims 1 and 3 to 12, a module for performing the method according to any one of claims 2 to 12, a module for performing the method according to any one of claims 13 and 15 to 24, or a module for performing the method according to any one of claims 14 to 24.

26. A communication apparatus, comprising at least one processor, wherein the at least one processor is configured to perform the method according to any one of claims 1 and 3 to 12, the method according to any one of claims 2 to 12, the method according to any one of claims 13 and 15 to 24, or the method according to any one of claims 14 to 24.

27. A communication system, comprising a first communication apparatus and/or a second communication apparatus, wherein the first communication apparatus is configured to perform the method according to any one of claims 1 and 3 to 12, or the method according to any one of claims 13 and 15 to 24; and the second communication apparatus is configured to perform the method according to any one of claims 2 to 12, or the method according to any one of claims 14 to 24.

28. A computer-readable storage medium, storing a computer program or instructions, wherein the computer program or the instructions are used to implement the method according to any one of claims 1 and 3 to 12, the method according to any one of claims 2 to 12, the method according to any one of claims 13 and 15 to 24, or the method according to any one of claims 14 to 24.

29. A computer program product, wherein the computer program product comprises a computer program; and when the computer program runs on a computer, the computer is caused to perform the method according to any one of claims 1 and 3 to 12, the method according to any one of claims 2 to 12, the method according to any one of claims 13 and 15 to 24, or the method according to any one of claims 14 to 24.
